# EUROPÄISCHE PATENTSCHRIFT

(11) **EP 1 554 093 B1**
(45) Veröffentlichungstag und Bekanntmachung des Hinweises auf die Patenterteilung: **29.03.2006**
(21) Anmeldenummer: 03807829.1
(22) Anmeldetag: 01.10.2003
(51) Int. Cl.: B27K 3/08, B27K 3/15, B27K 3/34, B27K 3/42, B27K 3/52, B27K 5/06

(54) **VERFAHREN ZUR VERBESSERUNG DER OBERFLÄCHENHÄRTE EINES HOLZKÖRPERS MIT EINER WÄSSRIGEN LÖSUNG EINES IMPRÄGNIERMITTELS**
METHOD FOR IMPROVING THE SURFACE HARDNESS OF A WOODEN BODY USING AN AQUEOUS SOLUTION OF AN IMPREGNATING AGENT
PROCEDE D'AMELIORATION DE LA DURETE DE LA SURFACE D'UN CORPS EN BOIS AU MOYEN D'UNE SOLUTION AQUEUSE D'UN AGENT D'IMPREGNATION

(30) Priorität: 04.10.2002 DE 10246400
(43) Veröffentlichungstag der Anmeldung: 20.07.2005
(73) Patentinhaber: BASF Aktiengesellschaft, 67056 Ludwigshafen (DE); Krause, Andreas, 37077 Gottingen (DE); Militz, Holger, 37120 Bovenden (DE)
(72) Erfinder: KRAUSE, Andreas, 37077 Göttingen (DE); MILITZ, Holger, 37120 Bovenden (DE)
(86) Internationale Anmeldenummer: PCT/EP2003/010875
(87) Internationale Veröffentlichungsnummer: WO 2004/033171

(56) Entgegenhaltungen:
- SE-C- 500 039
- US-A- 4 005 039
- US-A- 4 396 391
- US-A- 4 908 238
- US-A- 5 384 012
- US-B1- 6 265 589

## Beschreibung

Die Erfindung betrifft ein Verfahren zur Herstellung eines Holzkörpers mit erhöhter Oberflächenhärte und niedriger Formaldehydemission, dadurch gekennzeichnet, dass man einen unbehandelten Holzkörper mit einer wässrigen Lösung eines
A) lmprägniermittels, bestehend aus einem mit Methanol, Ethanol, n-Propanol, iso-Propanol, n-Butanol, n-Pentanol, Ethylenglykol, Diethylenglykol, 1,2- und 1,3-Propylenglykol, 1,2-, 1,3-, und 1,4-Butylenglykol, Glycerin, Polyethylenglykole der Formel HO(CH₂CH₂O)ₙH mit n von 3 bis 20 oder deren Gemischen modifizierten 1,3-Bis(hydroxymethyl)-4,5-dihydroxyimidazolidinon-2, und
B) eines Katalysators aus der Gruppe der Ammonium- oder Metallsalze, organischen oder anorganischen Säuren oder deren Gemische, imprägniert, trocknet und anschließend bei erhöhter Temperatur aushärtet.

Unter einem Holzkörper wird ein Formkörper aus Vollholz unter Einschluss von Furnieren verstanden. Aus dem Holzkörper und dem Imprägniermittel soll gleichsam ein Verbundwerkstoff entstehen, bei dem die positiven Eigenschaften des natürlichen Werkstoffs Holz, insbesondere das ästhetische Aussehen, beibehalten bleiben, jedoch eine oder mehrere physikalische Eigenschaften wesentlich verbessert sind. Dies bezieht sich insbesondere auf die Oberflächenhärte.

Aus der Veröffentlichung "Treatment of timber with water soluble dimethylol resins to improve the dimensional stability and durability", erschienen in Wood Science and Technology 1993, Seiten 347-355, ist es bekannt, zur Verbesserung der Schwind- und Quelleigenschaften von Holz sowie des Widerstandes gegen Pilze und Insekten dieses mit einem Imprägniermittel zu behandeln, das aus einer wässrigen Lösung von Dimethyloldihydroxyethylenharnstoff (DMDHEU oder 1,3- Bis(hydroxymethyl)-4,5-dihydroxyimidazolidinon-2) und einem Katalysator besteht. Als Katalysatoren werden dabei Metallsalze, Zitronensäure und Aminsalze, einzeln oder in Kombination eingesetzt. Das DMDHEU wird in der wässriger Lösung in Konzentrationen zwischen 5 %'bis 20 % eingesetzt. Die hinzugefügte Katalysatormenge beträgt 20 %, bezogen auf das DMDHEU. Die Imprägnierung geschieht unter Vakuum. Bei erhöhter Temperatur findet eine Reaktion des DMDHEU mit sich selbst und dem Holz statt. Diese Reaktion läuft während einer Stunde in einem Trockenofen bei Temperaturen von 80 °C oder 100 °C ab. Die so behandelten Holzproben weisen eine Verbesserung der Schwind- und Quelleigenschaften bis zu 75 % auf, und zwar bei Konzentrationen des DMDHEU von 20 %. Auf diese Weise wurden Holzkörper mit Abmessungen von 20 mm x 20 mm x 10 mm untersucht. Das beschriebene Verfahren lässt sich nur bei kleinen Abmessungen der Holzkörper anwenden, weil diese bei größeren Abmessungen zu Rissbildung neigen.

Aus der Veröffentlichung von W. D. Ellis, J. L. O'Dell "Wood-Polymer Composites Made with Acrylic Monomers, Isocyanate, and Maleic Anhydride", veröffentlicht in Journal of Applied Polymer Science, Vol. 73, Seiten 2493-2505 (1999) ist es bekannt, natürliches Holz mit einer Mischung aus Acrylaten, Isocyanat und Maleinsäureanhydrid unter Vakuum zu behandeln. Die eingesetzten Stoffe reagieren mit sich selbst, nicht jedoch mit dem Holz. Durch eine solche Imprägnierung erhöht sich die Dichte, die Härte und der Widerstand gegen Wasserdampfdiffusion. Auch die Wasserabweisung und die Dimensionsstabilität des Holzes wird verbessert.

Aus der EP-B 0 891 244 ist es bekannt, Holzkörper aus Vollholz mit einem biologisch abbaubaren Polymer, einem Naturharz und/oder einem Fettsäureester - gegebenenfalls unter Anwendung von Vakuum und/oder Druck - zu imprägnieren. Die Imprägnierung geschieht unter erhöhten Temperaturen. Dabei werden die Poren im Holz zumindest weitgehend gefüllt und es entsteht ein Formkörper, der sowohl Holz wie auch biologisch abbaubares Polymer enthält. Eine Reaktion des Polymers mit dem Holz findet nicht statt. Mit dieser Behandlung gehen die charakteristischen Eigenschaften von Holz, die Bioabbaubarkeit sowie die mechanischen Eigenschaften nicht verloren. Die Thermoplastizität kann gesteigert werden. Je nach dem eingebrachten Polymeranteil ergibt sich eine Erhöhung der Oberflächenhärte durch die Einlagerung des Polymers in die Holzmatrix, sodass von Natur aus weiche Hölzer auch für hochwertige Fußböden geeignet sind.

Aus der SE-C 500 039 ist ein Verfahren zur Härtung von Holz unter Verdichtung beschrieben, bei dem unbehandeltes Holz mit verschiedenen Aminoplastmonomeren auf Basis von Melamin und Formaldehyd mittels Vakuumdruckimprägnierung getränkt, anschließend getrocknet und in einer Presse unter Verdichtung bei erhöhter Temperatur ausgehärtet werden. Als Vemetzer werden unter anderem DMDHEU, Dimethylolharnstoff, Dimethoxymethylhamstoff, Dimethylolethylenharnstoff, Dimethylolpropylenharnstoff sowie Dimethoxymethyluron genannt.
Dieses Verfahren hat den Nachteil, dass die natürliche Holzstruktur durch die Verdichtung verloren geht sowie die Formaldehydemission des fertigen Holzkörpers je nach verwendetem Vernetzer relativ hoch ist.

Der Erfindung lag die Aufgabe zugrunde, ein Verfahren zur Verbesserung der Oberflächenhärte eines Holzkörpers auch mit größeren Dimensionen zur Verfügung zu stellen, das die Nachteile des Standes der Technik nicht aufweist, insbesondere zu keiner Rißbildung im Holz führt, zu niedrigen Formaldehydemissionen im Holzkörper führt und Holzkörper liefert, bei denen die natürliche Holzstruktur erhalten bleibt. Damit ergeben sich für den Holzkörper verschiedene vorteilhafte Anwendungsmöglichkeiten, insbesondere der Einsatz als Parkett.

Die Aufgabe der Erfindung wurde erfindungsgemäß mit dem eingangs beschriebenen Verfahren gelöst.

Als Imprägniermittel A) für Holzkörper ist geeignet ein mit Methanol, Ethanol, n-Propanol, iso-Propanol, n-Butanol, n-Pentanol, Ethylenglykol, Diethylenglykol, 1,2- und 1,3-Propylenglykol, 1,2-, 1,3-, und 1,4-Butylenglykol, Glycerin, Polyethylenglykole der Formel HO(CH₂CH₂O)ₙH mit n von 3 bis 20 oder deren Gemischen modifiziertes 1,3-Bis(hydroxymethyl)-4,5-dihydroxyimidazolidinon-2.

Modifiziertes 1,3-Bis(hydroxymethyl)-4,5-dihydroxyimidazolidinon-2 (mDMDHEU) ist beispielsweise aus der US-A- 4,396,391 und der WO 98/29393 bekannt.

Zur Modifizierung des 1,3-Bis(hydroxymethyl)-4,5-dihydroxyimidazolidinon-2 (mDMDHEU) werden DMDHEU und der einwertige Alkohol und/oder das Polyol gemischt, wobei der einwertige Alkohol und/oder das Polyol in einer Menge von je 0,1 bis 2,0 Moläquivalenten, bezogen auf DMDHEU, eingesetzt werden. Die Mischung aus DMDHEU, einwertigem-Alkohol und/oder Polyol wird bei Temperaturen von 20 bis 70°C und einem pH-Wert von 1 bis 2,5 umgesetzt, wobei der pH-Wert nach der Umsetzung auf 4 bis 8 eingestellt wird.

Geeignete Imprägniermittel C) sind 1,3- Bis(hydroxymethyl)-4,5-dihydroxyimidazolidinon-2, 1,3-dimethyl-4,5-dihydroxyimidazolidinon-2, Dimethylolharnstoff, Bis(methoxymethyl)hamstoff, Tetramethylolacetylenediharnstoff, 1,3-Bis(hydroxymethyl)imidazolidinon-2, Methylolmethylharnstoff, oder deren Gemische.
Bevorzugt ist 1,3- Bis(hydroxymethyl)-4,5-dihydroxyimidazolidinon-2.

Geeignete Imprägniermittel D) sind C₁₋₅-Alkohole, Polyole oder deren Gemische wie beispielsweise Methanol, Ethanol, n-Propanol, iso-Propanol, n-Butanol, n-Pentanol, Ethylenglykol, Diethylenglykol, 1,2- und 1,3-Propylenglykol, 1,2-, 1,3-, und 1,4-Butylenglykol, Glycerin, Polyethylenglykole der Formel HO(CH₂CH₂O)ₙH mit n von 3 bis 20 oder deren Gemische.

Bevorzugt sind Methanol, Diethylenglykol oder deren Gemische.

Das Imprägniermittel A) und gegebenenfalls C) und D) werden in einer Konzentration von 1 bis 60 Gew.%, bevorzugt 10 bis 50 Gew.% , bezogen auf die wässrige Imprägniermittellösung, angewendet.

Wird das Imprägniermittel C) mitverwendet, so ist 1 bis 60 Gew. %, bezogen auf das Imprägniermittel A), bevorzugt.

Wird das Imprägniermittel D) mitverwendet, so ist 1 bis 40 Gew. %, bezogen auf das Imprägniermittel A), bevorzugt.

Geeignete Katalysatoren B) sind Metallsalze aus der Gruppe Metallhalogenide, Metallsulfate, Metallnitrate, Metalltetrafluoroborate, Metallphosphate oder deren Gemische. Beispiele sind Magnesiumchlorid, Magnesiumsulfat, Zinkchlorid, Lithiumchlorid, Lithiumbromid, Bortrifluorid, Aluminiumchlorid, Aluminiumsulfat, Zinknitrat, Natriumtetrafluoroborat oder deren Gemische.
Geeignete Katalysatoren B) sind auch Ammoniumsalze aus der Gruppe Ammoniumchlorid, Ammoniumsulfat, Ammoniumoxalat, Diammoniumphosphat oder deren Gemische.
Weitere geeignete Katalysatoren B) sind organische oder anorganische Säuren. Geeignete Beispiele sind Maleinsäure, Ameisensäure, Zitronensäure, Weinsäure, Oxalsäure, p-Toluolsulfonsäure, Salzsäure, Schwefelsäure, Borsäure oder deren Gemische.
Bevorzugt werden Magnesiumchlorid, Zinkchlorid, Magnesiumsulfat, Aluminiumsulfat verwendet.
Besonders bevorzugt ist Magnesiumchlorid.

Der Katalysator B) wird in einer Konzentration von 0,1 bis 10 Gew.%, bevorzugt 0,2 bis 8 Gew.%, besonders bevorzugt 0,3 bis 5 Gew.% , bezogen auf das Imprägniermittel A) und gegebenenfalls C) und D), verwendet.

Bei dem Verfahren der vorliegenden Erfindung kann die Imprägnierung unter Vakuumeinwirkung mit anschließender Druckeinwirkung durchgeführt werden. Dabei wird der Holzkörper in einer Tränkanlage einem Vakuum von 10 bis 100 mbar für einen Zeitraum von 10 Minuten bis 2 Stunden, bevorzugt etwa 30 min, je nach Abmessungen des Holzkörpers, ausgesetzt und danach mit dem Imprägniermittel geflutet. Als Vorteilhaft hat sich ein Vakuum von etwa 50 mbar für etwa eine Stunde erwiesen. Alternativ kann der Holzkörper in der Tränkanlage aber auch zuerst mit dem Imprägniermittel geflutet werden und danach einem Vakuum von 10 bis 100mbar für den obengenannten Zeitraum ausgesetzt werden.
Danach erfolgt die Druckeinwirkung bei Drücken von 2 bis 20 bar, bevorzugt 10 bis 12 bar, je nach Abmessungen der Holzkörpers über einen Zeitraum von 10 Minuten bis 2 Stunden, bevorzugt etwa eine Stunde. Das Vakuumdruckverfahren ist insbesondere in Verbindung mit hohen Gewichtsanteilen des Imprägniermittels sinnvoll.

Nach der Druckphase wird die Restflüssigkeit entfernt und der imprägnierte Holzkörper fixiert und mit einer Temperatur von 20°C bis 40°C vorgetrocknet. Vortrocknung bedeutet, dass der Holzkörper unter den Fasersättigungspunkt getrocknet wird, der je nach Art des Holzes bei etwa 30 Gew% liegt. Diese Vortrocknung wirkt der Gefahr einer Rissbildung entgegen. Bei kleinformatigen Holzkörpern, beispielsweise Furnieren, kann die Vortrocknung entfallen. Bei Holzkörpern mit größeren Abmessungen ist die Vortrocknung jedoch immer sinnvoll.

Das in das Holz eingebrachte Imprägniermittel wird vorzugsweise unter Anwendung einer Temperatur von etwa 70 °C bis 170 °C, bevorzugt 80°C bis 150°C über einen Zeitraum von 10 min bis 72 Stunden zur Reaktion mit sich selbst und dem Holz gebracht. Die Reaktion des Imprägniermittels kann insbesondere bei etwa 120 °C für eine Dauer von etwa 12 Stunden stattfinden. Damit werden nicht nur die Poren im Holz mit dem Imprägniermittel angefüllt, sondern es entsteht eine Quervemetzung zwischen Imprägniermittel und dem Holz selbst. Bei Furnieren können eher höhere Temperaturen und kürzere Zeiten angewendet werden.

Mit dem neuen Verfahren wird gleichsam ein neuer Werkstoff hergestellt, bei dem der Anteil des Holzes zu dem Anteil des Imprägniermittels in der Größenordnung von etwa 1 : 0,3 bis 1 liegt. Das Gewicht des neuen Werkstoffs ist gegenüber dem Gewicht des unbehandelten Holzes um etwa 30 % bis 100 % gesteigert. Der Werkstoff hat praktisch nutzbare verbesserte technische Eigenschaften und trotzdem das gefällige Aussehen von Holz. Die Oberflächenhärte wird etwa 2- bis 3-fach erhöht. Es sind Brinellhärten im Bereich von 80 bis 100 N/mm² z. B. bei Buche erreichbar, während unbehandelte Buche eine Brinellhärte von etwa 30 bis 37 N/m m² aufweist. Zusätzlich sind die Formaldehydemissionen gegenüber Holz, das mit herkömmlichen Hamstoff-Formaldehydharzen vernetzt wurde, beträchtlich reduziert, was speziell bei der Verwendung im Innenbereich von Interesse ist. Damit erschließen sich neue Anwendungsgebiete, insbesondere der gesamte Bereich des Holzparketts. Es wird ein Werkstoff geschaffen, der pflegeleicht, langlebig und in hohen Beanspruchungsklassen einsetzbar ist. Auch ist die Anfälligkeit gegen wechselnde klimatische Verhältnisse, insbesondere Feuchtigkeit, reduziert.

In einer besonderen Ausführungsform wird der imprägnierte und vorgetrocknete Holzkörper zur Fixierung mit einer beheizbaren Presse festgehalten. Damit ist es in einfacher Weise möglich, dem Verwerfen des Holzkörpers entgegenzuwirken und gleichzeitig den Aushärtevorgang des Imprägniermittels durchzuführen. Hierbei wird mit relativ niedrigem Pressdruck gearbeitet, so dass die Oberflächenstruktur des Holzkörpers erhalten bleibt.

### Anwendungsbeispiel 1

Gemäß diesem Anwendungsbeispiel wurden die Deckschichten eines Fertigparketts behandelt. Die Deckschichten können aus Buche bestehen, andere imprägnierbare Holzarten sind ebenfalls möglich. Die Verfahrensschritte sind auch für die Herstellung eines Einschichtparketts, von Dielen sowie auch aus anderen Holzarten in ähnlicher Weise möglich.
1.) Eine 50%ige wässrige Lösung eines mit Diethylenglykol und Methanol modifizierten DMDHEUs (mDMDHEU) wurde mit 1,5 % MgCl₂ x 6 H₂O vermischt. Die sägerauhen, auf ca. 12 % Holzfeuchte getrockneten Lamellen der Deckschicht wurden in eine Tränkanlage eingebracht. Die Tränkanlage wurde für 30 Minuten einem Vakuum von absolut 100 mbar ausgesetzt und anschließend mit dem Imprägniermittel geflutet. Anschließend wurde ein Druck von 10 bar für eine Stunde angelegt. Die Druckphase wurde beendet und die Restflüssigkeit entfernt.
2.) Die imprägnierten Lamellen der Deckschicht wurden in Stapeln so fixiert, dass ein Verwerfen unmöglich gemacht wurde. Die Lamellen wurden für ca. 7 Tage bei einer Temperatur von 40 °C getrocknet.

Die Reaktion zwischen dem Holz und dem Imprägniermittel zu dem Verbundwerkstoff geschah in der Weise, dass die Lamellen in eine beheizbare Presse eingebracht wurden. Die Presse wurde auf 130 °C erhitzt und die Lamellen mit 0,9 N/mm² gepresst. Die Dauer der Temperatureinwirkung war abhängig von der Holzart und den Abmessungen der Lamellen. Bei 4 bis 5 mm dicken Lamellen betrug die Reaktionszeit ca. 1 Stunde.
Nach dem Abkühlen der Lamellen können diese wie unbehandelte Lamellen weiter verarbeitet werden. Die Lamellen wiesen die Abmessungen 500 mm x 100 m x 4 mm auf.

### Formaldehydgehalt:

Der Formaldehydgehalt der Hölzer wurde nach der Flaschenmethode in Anlehnung an die EN 717 Teil 4 gemessen.

**Tabelle 1**

| Holz | Behandlung | Formaldehydgehalt | Verbesserung |
|---|---|---|---|
| Lamellen aus Buche | 30% DMDHEU; 1,5% MgCl₂ x 6 H₂O | 28,27* | |
| Lamellen aus Buche | 30% mDMDHEU; 1,5% MgCl₂ x 6 H₂O | 9,69* | 66% |

| | | | |
|---|---|---|---|
| * Die Konzentration wird in mg Formaldehyd pro 100g Holz angegeben. | | | |

Die mit modifiziertem DMDHEU behandelten Holzkörper wiesen einen sehr stark reduzierten Formaldehydgehalt gegenüber den mit herkömmlichen DMDHEU behandelten Holzkörpern auf.

| Holz | Brinellhärte | Verbesserung |
|---|---|---|
| Unbehandelt | 35 N/mm² | |
| Behandelt | 73 N/mm² | 109% |

Die Oberflächenhärte wurde mit diesem Verfahren sehr stark erhöht. Die Messung erfolgte in Anlehnung an die EN 1534.

### Anwendungsbeispiel 2

Dieses Anwendungsbeispiel zielt auf die Erstellung einer Massivholzplatte aus Kiefernholz ab, die aus Lamellen mit einer Abmessung von 500 mm x 30 mm x 30 mm zusammengefügt ist.
Ein mit Diethylenglykol und Methanol modifiziertes DMDHEU (mDMDHEU) wurde auf 30 Gew.-% mit Wasser verdünnt und mit 1,5 Gew.-% MgCl₂ x 6 H₂O vermischt. Die sägerauhen, auf ca. 12 % Holzfeuchte getrockneten Lamellen wurden in eine Tränkanlage eingebracht, mit dem Imprägniermittel geflutet und für 30 Minuten einem Vakuum von absolut 40 mbar ausgesetzt. Anschließend wurde ein Druck von 10 bar für 2 Stunden angelegt. Die Druckphase wurde beendet und die Restflüssigkeit entfernt.
Die Lamellen wurden getrocknet, indem diese in Stapeln so fixiert wurden, dass ein Verwerfen unmöglich gemacht wurde. Es erfolgte eine Trocknung über eine Zeit von 15 Tagen bei Raumtemperatur. Es kann auch eine herkömmliche Trockenkammer und eine erhöhte Temperatur eingesetzt werden, um die Zeit der Vortrocknung abzukürzen. Die Lamellen wurden bei Beibehaltung ihrer Fixierung unter Umluft auf ca. 105 °C erhitzt. Die Dauer der Temperatureinwirkung ist abhängig von der Holzart und den Abmessungen der Lamellen. Bei 3 cm dicken Lamellen betrug die Reaktionszeit 48 Stunden. Nach dem Abkühlen der Lamellen können diese wie unbehandelte Massivholzteile zu der Platte verleimt werden.

### Formaldehydgehalt:

Der Formaldehydgehalt der Hölzer wurde nach der Flaschenmethode in Anlehnung an die EN 717 Teil 4 gemessen.

**Tabelle 2**

| Holz | Behandlung | Formaldehydgehalt | Verbesserung |
|---|---|---|---|
| Lamellen aus | 30% DMDHEU; | 19,11* | |
| Kiefersplint | 1,5% M_{g}Cl₂ x 6 H₂O | | |
| Lamellen aus Kiefersplint | 30% mDMDHEU; 1,5% MgCl₂ x 6 H₂O | 7,91* 7,91 * | 59% 59% |

| | | | |
|---|---|---|---|
| * Die Konzentration wird in mg Formaldehyd pro 100g Holz angegeben. | | | |

Die mit modifiziertem DMDHEU behandelten Holzkörper wiesen einen sehr stark reduzierten Formaldehydgehalt gegenüber den mit herkömmlichen DMDHEU behandelten Holzkörpern auf.

| Holz | Brinellhärte | Verbesserung |
|---|---|---|
| Unbehandelt | 16 N/mm² | |
| Behandelt | 30 N/mm² | 88 % |

Die Oberflächenhärte wurde mit diesem Verfahren sehr stark erhöht. Die Messung erfolgte in Anlehnung an die EN 1534.

## Patentansprüche

1. Verfahren zur Herstellung eines Holzkörpers mit erhöhter Oberflächenhärte, **dadurch gekennzeichnet, dass** man einen unbehandelten Holzkörper mit einer wässrigen Lösung eines
A) Imprägniermittels, bestehend aus einem mit Methanol, Ethanol, n-Propanol, iso-Propanof, n-Butanol, n-Pentanol, Ethylenglykol, Diethylenglykol, 1,2- und 1,3-Propylenglykol, 1,2-, 1,3-, und 1,4-Butylenglykol, Glycerin, Polyethylenglykole der Formel HO(CH₂CH₂O)ₙH mit n von 3 bis 20 oder deren Gemischen modifizierten 1,3-Bis(hydroxymethyl)-4,5-dihydroxyimidazolidinon-2, und
B) eines Katalysators aus der Gruppe der Ammonium- oder Metallsalze, organischen oder anorganischen Säuren oder deren Gemische, imprägniert, trocknet und anschließend bei erhöhter Temperatur aushärtet.

2. Verfahren nach Anspruch 1, **dadurch gekennzeichnet, dass** man ein Imprägniermittel C) aus der Gruppe 1,3- Bis(hydroxymethyl)-4,5-dihydroxyimidazolidinon-2, 1,3-dimethyl-4,5-dihydroxyimidazolidinon-2, Dimethylolharnstoff, Bis(methoxymethyl)harnstoff, Tetramethylolacetylenedihamstoff, 1,3-Bis(hydroxymethyl)imidazolidinon-2, Methylolmethylharnstoff, oder deren Gemische mitverwendet.

3. Verfahren nach einem der Ansprüche 1 bis 2, **dadurch gekennzeichnet, dass** man ein Imprägniermittel D) aus der Gruppe eines C₁₋₅-Alkohols, eines Polyols oder deren Gemische mitverwendet.

4. Verfahren nach Anspruch 3, **dadurch gekennzeichnet, dass** man Methanol, Ethanol, n-Propanol, iso-Propanol, n-Butanol, n-Pentanol, Ethylenglykol, Diethylenglykol, 1,2- und 1,3-Propylenglykol, 1,2-, 1,3-, und 1,4-Butylenglykol, Glycerin, Polyethylenglykole der Formel HO(CH₂CH₂O)ₙH mit n von 3 bis 20 und deren Gemische mitverwendet.

5. Verfahren nach Anspruch 4, **dadurch gekennzeichnet, dass** man Methanol, Diethylenglykol oder deren Gemische mitverwendet.

6. Verfahren nach einem der Anspruch 1 bis 5, **dadurch gekennzeichnet, dass** man die Imprägniermittel A) und gegebenenfalls C) und D) in einer Konzentration von 1 bis 60 Gew.% in der wässrigen Lösung anwendet.

7. Verfahren nach einem der Ansprüche 1 bis 6, **dadurch gekennzeichnet, dass** man als Katalysator B) Metallsalze aus der Gruppe Metallhalogenide, Metallsulfate, Metallnitrate, Metalltetrafluoroborate, Metallphosphate oder deren Gemische verwendet.

8. Verfahren nach Anspruch 7, **dadurch gekennzeichnet, dass** man als Katalysator B) Metallsalze aus der Gruppe Magnesiumchlorid, Magnesiumsulfat, Zinkchlorid, Lithiumchlorid, Lithiumbromid, Bortrifluorid, Aluminiumsulfat, Aluminiumchlorid, Zinknitrat, Natriumtetrafluoroborat, oder deren Gemische verwendet.

9. Verfahren nach einem der Ansprüche 1 bis 6, **dadurch gekennzeichnet, dass** man als Katalysator B) Ammoniumsalze aus der Gruppe Ammoniumchlorid, Ammoniumsulphat, Ammoniumoxalat, Diammoniumphosphat oder deren Gemische verwendet.

10. Verfahren nach einem der Ansprüche 1 bis 6, **dadurch gekennzeichnet, dass** man als Katalysator B) organische oder anorganische Säuren aus der Gruppe Maleinsäure, Ameisensäure, Citronensäure, Weinsäure, Oxalsäure, p-Toluolsulfonsäure, Salzsäure, Schwefelsäure, Borsäure oder deren Gemische verwendet.

11. Verfahren nach einem der Ansprüche 1 bis 8, **dadurch gekennzeichnet, dass** man als Katalysator B) Magnesiumchlorid verwendet.

12. Verfahren nach einem der Ansprüche 1 bis 11, **dadurch gekennzeichnet, dass** man den Katalysator B) in einer Konzentration von 0,1 bis 10 Gew.%, bezogen auf die Menge des Imprägniermittels A) und gegebenenfalls C) und D), verwendet.

13. Verfahren nach einem der Ansprüche 1 bis 12, **dadurch gekennzeichnet, dass** man den imprägnierten Holzkörper bei einer Temperatur von 20 bis 60°C trocknet.

14. Verfahren nach einem der Ansprüche 1 bis 13, **dadurch gekennzeichnet, dass** man den imprägnierten und getrockneten Holzkörper bei einer Temperatur von 80 bis 170°C aushärtet.

15. Verfahren nach Anspruch 14, **dadurch gekennzeichnet, dass** man den imprägnierten und getrockneten Holzkörper bei einer Temperatur von 90 bis 150°C aushärtet.

16. Verfahren nach einem der Ansprüche 1 bis 15, **dadurch gekennzeichnet, dass** man den imprägnierten und getrockneten Holzkörper über einen Zeitraum von 10 min bis 72 Stunden aushärtet.

17. Verfahren nach einem der Ansprüche 1 bis 16, **dadurch gekennzeichnet, dass** man den Holzkörper nach der Imprägnierung und Trocknung so fixiert, dass einer Veränderung der Form des Holzkörpers während der Aushärtung entgegengewirkt wird.

18. Verfahren nach Anspruch 17, **dadurch gekennzeichnet, dass** man den Holzkörper in einer beheizbaren Presse fixiert.

19. Holzkörper mit erhöhter Dauerhaftigkeit, Dimensionsstabilität und Oberflächenhärte, hergestellt nach einem Verfahren gemäß einem der Ansprüche 1 bis 18.

## Claims

1. A process for the production of a wood body having increased surface hardness, **characterized in that** an untreated wood body is impregnated with an aqueous solution of
A) an impregnating agent consisting of a 1,3-bis(hydroxymethyl)-4,5-dihydroxyimidazolidin-2-one modified with methanol, ethanol, n-propanol, isopropanol, n-butanol, n-pentanol, ethylene glycol, diethylene glycol, 1,2- and 1,3-propylene glycol, 1,2-, 1,3- and 1,4-butylene glycol, glycerol, polyethylene glycols of the formula HO (CH₂CH₂O)ₙH, where n is from 3 to 20 or mixtures thereof, and
B) a catalyst from the group consisting of ammonium or metal salts, organic or inorganic acids or mixtures thereof,
dried and then hardened at elevated temperature.

2. The process according to claim 1, **characterized in that** an impregnating agent C) from the group consisting of 1,3-bis(hydroxymethyl)-4,5-dihydroxyimidazolidin-2-one, 1,3-dimethyl-4,5-dihydroxyimidazolidin-2-one, dimethylolurea, bis(methoxymethyl)urea, tetramethylolacetylenediurea, 1,3-bis(hydroxymethyl)-imidazolidin-2-one, methylolmethylurea or mixtures thereof is concomitantly used.

3. The process according to either of claims 1 and 2, **characterized in that** an impregnating agent D) from the group consisting of a C₁₋₅-alcohol, a polyol or mixtures thereof is concomitantly used.

4. The process according to claim 3, **characterized in that** methanol, ethanol, n-propanol, isopropanol, n-butanol, n-pentanol, ethylene glycol, diethylene glycol, 1,2-and 1,3-propylene glycol, 1,2-, 1,3- and 1,4-butylene glycol, glycerol, polyethylene glycols of the formula HO(CH₂CH₂O)ₙH, where n is from 3 to 20, or mixtures thereof are concomitantly used.

5. The process according to claim 4, **characterized in that** methanol, diethylene glycol or a mixture thereof is concomitantly used.

6. The process according to any of claims 1 to 5, **characterized in that** the impregnating agents A) and, if appropriate, C) and D) are used in a concentration of from 1 to 60% by weight in the aqueous solution.

7. The process according to any of claims 1 to 6, **characterized in that** metal salts from the group consisting of metal halides, metal sulfates, metal nitrates, metal tetrafluoroborates, metal phosphates or mixtures thereof are used as catalyst B).

8. The process according to claim 7, **characterized in that** metal salts from the group consisting of magnesium chloride, magnesium sulfate, zinc chloride, lithium chloride, lithium bromide, boron trifluoride, aluminum sulfate, aluminum chloride, zinc nitrate, sodium tetrafluoroborate or mixtures thereof are used as catalyst B).

9. The process according to any of claims 1 to 6, **characterized in that** ammonium salts from the group consisting of ammonium chloride, ammonium sulfate, ammonium oxalate, diammonium phosphate or mixtures thereof are used as catalyst B).

10. The process according to any of claims 1 to 6, **characterized in that** organic or inorganic acids from the group consisting of maleic acid, formic acid, citric acid, tartaric acid, oxalic acid, p-toluenesulfonic acid, hydrochloric acid, sulfuric acid, boric acid or mixtures thereof are used as catalyst B).

11. The process according to any of claims 1 to 8, **characterized in that** magnesium chloride is used as catalyst B).

12. The process according to any of claims 1 to 11, **characterized in that** the catalyst B) is used in a concentration of from 0.1 to 10% by weight, based on the amount of the impregnating agent A) and, if appropriate, C) and D).

13. The process according to any of claims 1 to 12, **characterized in that** the impregnated wood body is dried at a temperature of from 20 to 60°C.

14. The process according to any of claims 1 to 13, **characterized in that** the impregnated and dried wood body is hardened at a temperature of from 80 to 170°C.

15. The process according to claim 14, **characterized in that** the impregnated and dried wood body is hardened at a temperature of from 90 to 150°C.

16. The process according to any of claims 1 to 15, **characterized in that** the impregnated and dried wood body is hardened over a period of from 10 min to 72 hours.

17. The process according to any of claims 1 to 16, **characterized in that**, after the impregnation and drying, the wood body is fixed so that a change in the shape of the wood body during the hardening is counteracted.

18. The process according to claim 17, **characterized in that** the wood body is fixed in a heatable press.

19. A wood body having increased durability, dimensional stability and surface hardness, prepared by a process according to any of claims 1 to 18.

## Revendications

1. Procédé de préparation d'un corps en bois à dureté de surface élevée, **caractérisé en ce qu'**on imprègne un corps en bois non traité au moyen d'une solution aqueuse
A) d'un agent d'imprégnation constitué d'une 1,3-bis(hydroxyméthyl)-4,5-dihydroxyimidazolidinone-2 modifiée par du méthanol, de l'éthanol, du n-propanol, de l'iso-propanol, du n-butanol, du n-pentanol, de l'éthylèneglycol, du diéthylèneglycol, du 1,2-propylèneglycol, du 1,3-propylèneglycol, du 1,2-butylèneglycol, du 1,3-butylèneglycol, du 1,4-butylèneglycol, de la glycérine, des polyéthylèneglycols de la formule HO(CH₂CH₂O)ₙH, où n a une valeur de 3 à 20, ou leurs mélanges, et
B) d'un catalyseur du groupe des sels d'ammonium ou de métal, des acides organiques ou inorganiques ou de leurs mélanges,
on le sèche et ensuite on le durcit à température élevée.

2. Procédé suivant la revendication 1, **caractérisé en ce qu'**on utilise simultanément un agent d'imprégnation C) du groupe de la 1,3-bis-(hydroxyméthyl)-4,5-dihydroxyimidazolidinone-2, de la 1,3-diméthyl-4,5-dihydroxyimidazolidinone-2, de la diméthylolurée, de la bis(méthoxyméthyl)urée, de la tétraméthylolacétylènediurée, de la 1,3-bis(hydroxyméthyl)imidazolidinone-2, de la méthylolméthylurée ou de leurs mélanges.

3. Procédé suivant l'une des revendications 1 et 2, **caractérisé en ce qu'**on utilise simultanément un agent d'imprégnation D) du groupe d'un alcool en C₁-C₅, d'un polyol ou de leurs mélanges.

4. Procédé suivant la revendication 3, **caractérisé en ce qu'**on utilise simultanément du méthanol, de l'éthanol, du n-propanol, de l'iso-propanol, du n-butanol, du n-pentanol, de l'éthylèneglycol, du diéthylèneglycol, du 1,2-propylèneglycol, du 1,3-propylèneglycol, du 1,2-butylèneglycol, du 1,3-butylèneglycol, du 1,4-butylèneglycol, de la glycérine, des polyéthylèneglycols de la formule HO(CH₂CH₂O)ₙH, où n a une valeur de 3 à 20 et leurs mélanges.

5. Procédé suivant la revendication 4, **caractérisé en ce qu'**on utilise simultanément du méthanol, du diéthylèneglycol ou leurs mélanges.

6. Procédé suivant l'une des revendications 1 à 5, **caractérisé en ce qu'**on applique les agents d'imprégnation A) et éventuellement C) et D) en une concentration de 1 à 60 % en poids dans la solution aqueuse.

7. Procédé suivant l'une des revendications 1 à 6, **caractérisé en ce que**, comme catalyseur B), on utilise des sels métalliques du groupe des halogénures métalliques, des sulfates métalliques, des nitrates métalliques, des tétrafluoroborates métalliques, des phosphates métalliques ou de leurs mélanges.

8. Procédé suivant la revendication 7, **caractérisé en ce que**, comme catalyseur B), on utilise des sels métalliques du groupe du chlorure de magnésium, du sulfate de magnésium, du chlorure de zinc, du chlorure de lithium, du bromure de lithium, du trifluorure de bore, du sulfate d'aluminium, du chlorure d'aluminium, du nitrate de zinc, du tétrafluoroborate de sodium ou de leurs mélanges.

9. Procédé suivant l'une des revendications 1 à 6, **caractérisé en ce que**, comme catalyseur B), on utilise des sels d'ammonium du groupe du chlorure d'ammonium, du sulfate d'ammonium, de l'oxalate d'ammonium, du phosphate diammonique ou de leurs mélanges.

10. Procédé suivant l'une des revendications 1 à 6, **caractérisé en ce que**, comme catalyseur B), on utilise des acides organiques ou inorganiques du groupe de l'acide maléique, de l'acide formique, de l'acide citrique, de l'acide tartrique, de l'acide oxalique, de l'acide p-toluènesulfonique, de l'acide chlorhydrique, de l'acide sulfurique, de l'acide borique ou de leurs mélanges.

11. Procédé suivant l'une des revendications 1 à 8, **caractérisé en ce que**, comme catalyseur B), on utilise du chlorure de magnésium.

12. Procédé suivant l'une des revendications 1 à 11, **caractérisé en ce qu'**on utilise le catalyseur B) en une concentration de 0,1 à 10 % en poids, par rapport à la quantité de l'agent d'imprégnation A), et éventuellement C) et D).

13. Procédé suivant l'une des revendications 1 à 12, **caractérisé en ce qu'**on sèche le corps en bois imprégné à une température de 20 à 60°C.

14. Procédé suivant l'une des revendications 1 à 13, **caractérisé en ce qu'**on durcit le corps en bois imprégné et séché à une température de 80 à 170°C.

15. Procédé suivant la revendication 14, **caractérisé en ce qu'**on durcit le corps en bois imprégné et séché à une température de 90 à 150°C.

16. Procédé suivant l'une des revendications 1 à 15, **caractérisé en ce qu'**on durcit le corps en bois imprégné et séché pendant un espace de temps de 10 minutes à 72 heures.

17. Procédé suivant l'une des revendications 1 à 16, **caractérisé en ce qu'**on fixe le corps en bois après l'imprégnation et le séchage de façon à s'opposer à une modification de la forme du corps en bois pendant le durcissement.

18. Procédé suivant la revendication 17, **caractérisé en ce qu'**on fixe le corps en bois dans une presse chauffable.

19. Corps en bois à durabilité, stabilité dimensionnelle et dureté de surface élevées, préparé suivant un procédé selon l'une des revendications 1 à 18.
